# EUROPÄISCHE PATENTSCHRIFT

(11) **EP 0 525 487 B1**
(45) Veröffentlichungstag und Bekanntmachung des Hinweises auf die Patenterteilung: **22.10.1997**
(21) Anmeldenummer: 92111853.5
(22) Anmeldetag: 11.07.1992
(51) Int. Cl.: H04M 1/00, H04M 1/274

(54) **Teilnehmereinrichtung mit einer Einrichtung zum Erlernen von Hörtönen**
Subscriber terminal with an identification device for audible tones
Terminal d'abonné muni d'un équipement d'acquisition de tonalités audibles

(30) Priorität: 27.07.1991 DE 4124977
(43) Veröffentlichungstag der Anmeldung: 03.02.1993
(73) Patentinhaber: GRUNDIG Aktiengesellschaft, 90762 Fürth (DE)
(72) Erfinder: Terkowski, Jürgen, Grundig E.M.V., Elektro-Mech., KG, Kurgartenstrasse 37, W-8510 Fürth/B (DE)

(56) Entgegenhaltungen:
- EP-A- 0 011 035
- EP-A- 0 067 776
- EP-A- 0 185 295
- WO-A-88/01819
- WO-A-92/11723
- US-A- 5 023 906

## Beschreibung

Die Erfindung betrifft eine Teilnehmereinrichtung nach dem Oberbegriff des Patentanspruchs 1.

Es ist bekannt, zur Signalisierung Hörtöne in den Vermittlungseinrichtungen zu erzeugen, welche von den Teilnehmereinrichtungen des Nachrichtensystems, an das sie angeschlossen sind, erkannt werden müssen. Die Hörtöne von öffentlichen Netzknoten in der Bundesrepublik Deutschland sind in der FTZ-Richtlinie 1TR2, Teil 2 vom Juni 1990 festgelegt. Bei Anordnung der Teilnehmereinrichtung in Nebenstellenanlagen sind die von der Teilnehmereinrichtung zu erkennenden Hörtöne bei gleicher Bedeutung in Frequenz und im Impuls-Pausen-Verhältnis grundlegend verschieden.

Aus der DE-A 24 26 690 ist ein automatischer Rufnummerngeber bekannt, bei dem bei der Eingabe einer Wahlinformation eine Pause zur Erkennung des Wahltons (Hörton) festgelegt wird, indem ein zusätzliches Codezeichen zwischen zwei Ziffern der Rufnummer eingegeben werden kann. Mittels des zusätzlichen Codezeichens wird bei dessen Auftreten die Aussendung der gespeicherten Rufnummer gestoppt. Der Weiterlaufbefehl für die Aussendung der gespeicherten Rufnummer kann vom Teilnehmer manuell oder von einem mit der Teilnehmerleitung verbundenen Wähltonerkenner abgegeben werden.

Bei den vorgenannten Verfahren werden entweder Wahlpausen mit einer definierten Maximallänge eingegeben oder eine Wähltonerkennungsschaltung bestimmt den Zeitpunkt für die Weiterwahl. Bei der Fehlbedienung durch den Benutzer oder bei der Umstellung einer Nebenstellenanlage kann nicht immer vermieden werden, daß eine Falschwahl auftritt. Weiterhin ist von Nachteil, daß nicht jeder Benutzer in der Lage ist, eine Umprogrammierung vorzunehmen, so daß hierfür hohe Kosten anfallen können.

Weiterhin ist aus der EP-A2-0269296 ein Wähltondetektor bekannt, mit dem die in einem bestimmten Frequenzband (beispielsweise von 350 Hz bis 733 Hz) liegenden Wähltöne zuverlässig erkannt werden können.

Der Erfindung liegt die Aufgabe zugrunde, eine Teilnehmereinrichtung derart auszugestalten, daß verschiedenartige Hörtöne, insbesondere innerhalb und außerhalb einer Nebenstellenanlage erzeugte Hörtöne, fehlerfrei erkannt werden.

Diese Aufgabe wird bei einer Teilnehmereinrichtung durch die Merkmale des Patentanspruchs 1 oder 2 gelöst.

Die erfindungsgemäße Teilnehmereinrichtung weist den Vorteil auf, daß eine in der Teilnehmereinrichtung TE vorhandene Steuereinrichtung ST und ein Speicher SP, welche in an sich bekannter Weise Funktionen der Teilnehmereinrichtung TE steuern und unterstützen, für das Erlernen von Hörtönen mitverwendet werden.

Aus der EP-A2-0194709 ist ein Verfahren und eine Schaltungsanordnung zur Einfügung von Wahlpausen zwischen gespeicherten Wahlziffern bekannt. Beim Gegenstand der daraus bekannten Teilnehmereinrichtung ist eine Steuereinrichtung vorgesehen, welche während der Eingabe der Wahl prüft, bei welchen Wahlfolgen und an welcher Stelle der Benutzer Wahlpausen einfügt und speichert diese in einem sogenannten Referenzspeicher ab. Dadurch ist eine besondere Bedienungsprozedur für die Einprogrammierung von Wahlpausen oder eine zusätzliche Schaltungsanordnung nicht erforderlich.

Bei der erfindungsgemäßen Teilnehmereinrichtung wird der in der EP-A2-0194709 aufgezeigte Weg zum Erlernen von Hörtönen benutzt. Die Teilnehmereinrichtung nach Patentanspruch 1 weist den Vorteil auf, daß vollautomatisch beim Einschalten der Teilnehmereinrichtung die Hörtöne neu erlernt werden. Wird bei einer Teilnehmereinrichtung beispielsweise der Anschluß ans Nachrichtennetz geändert, so daß sich auch die Hörtöne ändern, werden beim nächsten Einschalten der Teilnehmereinrichtung die neuen Hörtöne ohne weitere Benutzereinwirkung neu erlernt.

Weiterhin weist die Teilnehmereinrichtung nach Patentanspruch 1 den Vorteil auf, daß diese auch an Nachrichtennetzen betrieben werden kann, deren Hörtöne von der FTZ-Richtlinie 1TR2, Teil 2, abweichen. In Nebenstellenanlagen treten beispielsweise oft nicht richtliniengemäße Hörtöne auf, die jetzt von der Teilnehmereinrichtung fehlerfrei erkannt werden.

Die Teilnehmereinrichtung nach Patentanspruch 2 weist den Vorteil auf, daß diese, sofern sie an eine Nebenstellenanlage angeschlossen ist, auch Hörtöne von außerhalb der Nebenstellenanlage erlernen kann. Wird beispielsweise ein Besetztton von außerhalb der Nebenstellenanlage durch die Teilnehmereinrichtung empfangen, so kann diese nach einer Wartezeit den Verbindungsversuch abbrechen und auflösen.

Die Teilnehmereinrichtung nach Patentanspruch 3 weist den Vorteil auf, daß durch Mitbenutzung des Wählautomatens der Teilnehmereinrichtung auf überraschend einfache Art und Weise sowohl innerhalb einer Nebenstellenanlage als auch außerhalb ein Besetztton erzeugt wird, der anschließend von der Einrichtung erlernt wird.

Die Erfindung wird im folgenden näher beschrieben und erläutert. Es zeigen:
- Fig. 1: Eine Ausführungsform der erfindungsgemäßen Teilnehmereinrichtung,
- Fig. 2: einen Programmablaufplan für das vollautomatische Erlernen des Impuls-Pausen-Verhältnisses der Hörtöne und
- Fig. 3: einen Programmablaufplan für das halbautomatische Erlernen des Impuls-Pausen-Verhältnisses der Hörtöne.

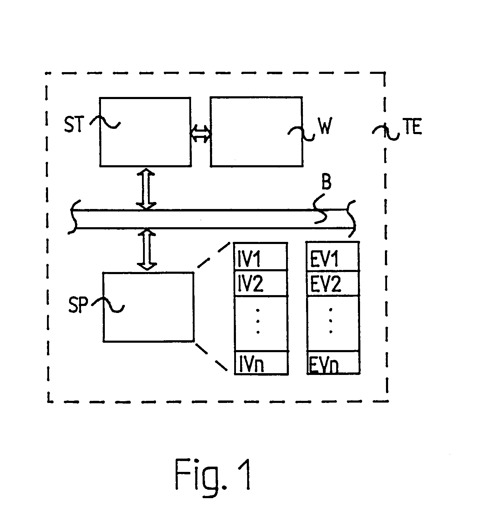

Eine Ausführungsform der erfindungsgemäßen Teilnehmereinrichtung TE ist in Fig. 1 dargestellt. Dabei wird von einer Teilnehmereinrichtung TE in Form eines Anrufbeantworters ausgegangen. Der Einsatz beliebig ausgestalteter Teilnehmereinrichtungen in anderen Nachrichtennetzen als einem Fernsprechnetz ist ebenfalls möglich, bei denen zur Signalisierung Hörtöne benutzt werden.

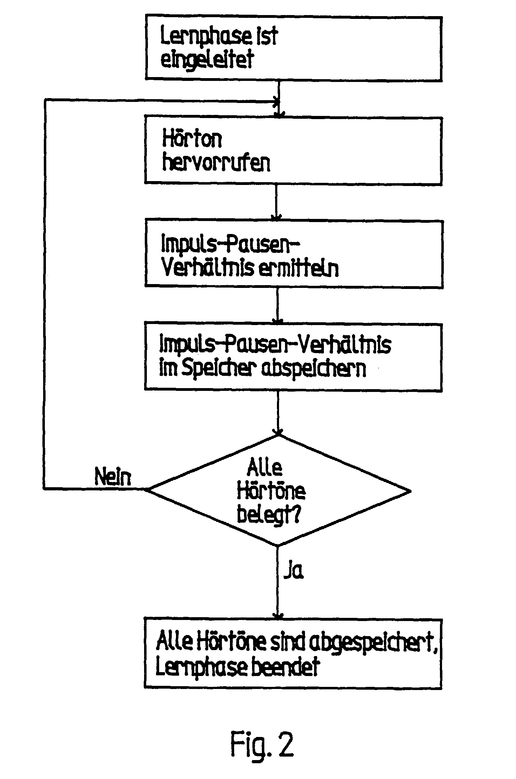

Im einzelnen zeigt Fig. 1 eine Steuereinrichtung ST, einen Speicher SP, der sich aus den Speicherplätzen IV1 bis IVn und EV1 bis EVn zusammensetzt, und einen die Komponenten verbindender Datenbus B. Die Steuereinrichtung ST, die vorzugsweise einen Mikroprozessor enthält, ermittelt das Impuls-Pausen-Verhältnis beim voll- und halbautomatischen Erlernen der Hörtöne und speichert dieses im Speicher SP ab. Weiterhin wird die Steuereinrichtung ST in an sich bekannter Weise zur Steuerung der übrigen Gerätefunktionen eingesetzt. Anhand des Ablaufdiagramms gemäß Fig. 2 wird das vollautomatische Erlernen von Hörtönen im folgenden näher beschrieben und erläutert.

Zur Inbetriebnahme des Anrufbeantworters TE wird dieser zur Stromversorgung mit dem elektrischen Leitungsnetz verbunden. Durch Betätigen des Gabelumschaltkontaktes wird der Wählton (erster Hörton) vom Anrufbeantworter TE empfangen. Die Steuereinrichtung ST bestimmt danach das Impuls-Pausen-Verhältnis dieses Hörtons und speichert es im Speicher SP an der Speicherstelle IV1 ab. Zum Erlernen weiterer von der Teilnehmereinrichtung TE empfangener Hörtöne wird analog vorgegangen. Diese werden in den weiteren Speicherstellen IV2 bis IVn abgespeichert.

Um beispielsweise einen weiteren Hörton (Besetztton) hervorzurufen, wird beim Empfangen des Wähltons ein Schleifenschluß in dem Anrufbeantworter TE durchgeführt. Von der Teilnehmerrichtung TE wird mittels eines mit der Steuereinrichtung ST verbundenen Wählautomatens W selbständig die eigene Rufnummer gewählt, worauf das Impuls-Pausen-Verhältnis ermittelt werden kann. Ist die Teilnehmereinrichtung TE nicht an einer Nebenstellenanlage angeschlossen, können auf diese Art alle auftretenden Hörtöne erlernt werden. Andernfalls ergibt sich die Notwendigkeit, nicht nur die Hörtöne der Nebenstellenanlage zu erlernen, sondern auch die des Nachrichtennetzes, an das die Nebenstelle angeschlossen ist.

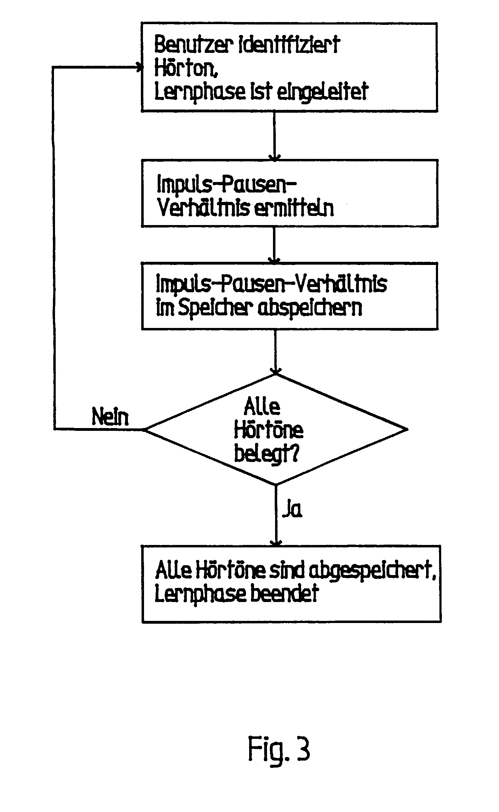

Anhand des Ablaufdiagramms gemäß Fig. 3 wird das halbautomatische Erlernen von Hörtönen im folgenden näher beschrieben und erläutert. Soll die Teilnehmereinrichtung TE Hörtöne des Nachrichtennetzes erlernen, an das die Nebenstelle angeschlossen ist, identifiziert der Benutzer die einzelnen Hörtöne und veranlaßt daraufhin, beispielsweise mittels Knopfdruck, die Steuereinrichtung ST, das Impuls-Pausen-Verhältnis des jeweiligen Hörtons zu ermitteln und dieses im Speicher SP abzuspeichern. Dieser Vorgang wird so lange wiederholt, bis alle benötigten Hörtöne an den Speicherstellen EV1 bis EVn abgespeichert sind.

Durch das erfindungsgemäße Verfahren wird sichergestellt, daß die Teilnehmereinrichtung TE immer die Hörtöne der nächstgelegenen Vermittlungsstelle kennt. Ist dies eine Nebenstellenanlage, können auch die Hörtöne außerhalb der Nebenstellenanlage erlernt werden. Eine Fehlfunktion der Teilnehmereinrichtung aufgrund falsch interpretierter Hörtöne wird ausgeschlossen.

Die Erfindung kann in allen Teilnehmereinrichtungen eingesetzt werden, die auf Hörtöne reagieren sollen.

## Patentansprüche

1. Teilnehmereinrichtung (TE), welche über eine Hauptanschlußleitung mit einem Nachrichtennetz in Verbindung steht, welche eine Steuereinrichtung (ST) zur Steuerung der verschiedenen Gerätefunktionen und/oder den Austausch vermittlungstechnischer Informationen zwischen Teilnehmereinrichtungen und Vermittlungsstellen des Nachrichtensystems aufweist und welche eine Einrichtung zum Auswerten von Hörtönen des Nachrichtensystems aufweist,
**dadurch gekennzeichnet,**
daß Mittel vorgesehen sind, durch deren Betätigung der Benutzer die Lemphase zum automatischen Erlernen von Hörtönen einleitet, daß die Steuereinrichtung (ST) Mittel zum Aufbau einer Verbindung aufweist, daß die Steuereinrichtung (ST) die Einrichtung zum Auswerten von Hörtönen beinhaltet, welche das Impuls-Pausen-Verhältnis der jeweiligen ankommenden Hörtöne automatisch nach dem Aufbau einer Verbindung auswertet, daß ein Speicher (SP) zur Speicherung mindestens eines Impuls-Pausen-Verhältnisses mit der Steuereinrichtung (ST) verbunden ist und daß die Steuereinrichtung (ST) Mittel aufweist, welche in der Betriebsphase einen Vergleich zwischen im Speicher (SP) gespeicherten Impuls-Pausen-Verhältnissen und Impuls-Pausen-Verhältnissen ankommender Hörtöne durchführen.

2. Teilnehmereinrichtung (TE), welche über eine Hauptanschlußleitung mit einem Nachrichtennetz in Verbindung steht, welche eine Steuereinrichtung (ST) zur Steuerung der verschiedenen Gerätefunktionen und/oder den Austausch vermittlungstechnischer Informationen zwischen Teilnehmereinrichtungen und Vermittlungsstellen des Nachrichtensystems aufweist und welche eine Einrichtung zum Auswerten von Hörtönen des Nachrichtensystems aufweist,
**dadurch gekennzeichnet,**
daß die Steuereinrichtung (ST) die Einrichtung zum Auswerten von Hörtönen beinhaltet, welche benutzergesteuert das Impuls-Pausen-Verhältnis auswertet, daß Mittel vorgesehen sind, durch deren Betätigung der Benutzer die Auswertung eines Hörtons einleitet,
daß ein Speicher (SP) zur Speicherung mindestens eines Impuls-Pausen-Verhältnisses mit der Steuereinrichtung (ST) verbunden ist und daß die Steuereinrichtung (ST) Mittel aufweist, welche in der Betriebsphase einen Vergleich zwischen im Speicher (SP) gespeicherten Impuls-Pausen-Verhältnissen und Impuls-Pausen-Verhältnissen ankommender Hörtöne durchführen.

3. Teilnehmereinrichtung (TE) nach Anspruch 1 oder 2,
**dadurch gekennzeichnet,**
daß die Teilnehmereinrichtung (TE) einen Wählautomaten (W) aufweist daß die Steuereinrichtung (ST) mit dem Wählautomaten und dem Speicher (SP) verbunden ist und daß die Steuereinrichtung (ST) in der Lernphase den Wählautomaten (W) zum Verbindungsaufbau über eine Vermittlungsstelle mit sich selbst und anschließend die Speicherung des Impuls-Pausen-Verhältnisses des Besetzttons im Speicher (SP) steuert.

## Claims

1. Subscriber device (TE) which is connected via a direct exchange line to a communications network, which comprises a control device (ST) for controlling the various appliance functions and/or the exchange of switching information between subscriber devices and switching centres of the telecommunications system and which comprises a device for evaluating audible tones of the telecommunications system, characterized in that means are provided by whose actuation the user initiates the learning phase for the automatic learning of audible tones, in that the control device (ST) comprises means for setting up a connection, in that the control device (ST) contains the device for evaluating audible tones which evaluates the mark-space ratio of the respective incoming audible tones automatically after a connection has been set up, in that a memory (SP) for storing at least one mark-space ratio is connected to the control device (ST) and in that the control device (ST) comprises means which carry out, in the operating phase a comparison between mark-space ratios stored in the memory (SP) and mark-space ratios of incoming audible tones.

2. Subscriber device (TE) which is connected via a direct exchange line to a telecommunications network, which comprises a control device (ST) for controlling the various appliance functions and/or the exchange of switching information between subscriber devices and switching centres of the telecommunications system and which comprises a device for evaluating audible tones of the telecommunications system, characterized in that the control device (ST) contains the device for evaluating audible tones which evaluates, under user control, the mark-space ratio, in that means are provided by whose actuation the user initiates the evaluation of an audible tone, in that a memory (SP) for storing at least one mark-space ratio is connected to the control device (ST) and in that the control device (ST) comprises means which carry out, in the operating phase, a comparison between mark-space ratios stored in the memory (SP) and mark-space ratios of incoming audible tones.

3. Subscriber device (TE) according to Claim 1 or 2, characterized in that the subscriber device (TE) comprises an automatic dialling facility (W), in that the control device (ST) is connected to the automatic dialling facility and the memory (SP) and in that, in the learning phase, the control device (ST) controls the automatic dialling facility (W) for setting up connections via a switching centre with itself and then controls the storage of the mark-space ratio of the busy tone in the memory (SP).

## Revendications

1. Dispositif d'abonné (TE), qui est relié par l'intermédiaire d'une ligne de raccordement principale à un réseau de transmission d'informations, qui comporte un dispositif de commande (ST) servant à commander les différentes fonctions d'appareils et/ou l'échange d'informations techniques de commutation entre des dispositifs d'abonnés et des centraux du système de transmission d'informations et qui comporte un dispositif pour évaluer des tonalités audibles du système de transmission d'informations, caractérisé en ce
que des moyens sont prévus, à l'aide desquels l'utilisateur déclenche la phase d'apprentissage permettant l'apprentissage automatique de tonalités audibles, que le dispositif de commande (ST) comporte des moyens pour établir une liaison, que le dispositif de commande (ST) comporte le dispositif pour évaluer des tonalités audibles qui évalue le rapport impulsion/pause des tonalités respectives arrivant après l'établissement d'une liaison, qu'une mémoire (SP) servant à mémoriser au moins un rapport impulsion/pause est reliée au dispositif de commande (ST) et que le dispositif de commande (ST) comporte des moyens qui, pendant la phase de fonctionnement, exécutent une comparaison entre les rapports impulsion/pause mémorisés dans la mémoire (SP) et les rapports impulsion/pause de tonalités audibles arrivantes.

2. Dispositif d'abonné (TE), qui est relié par l'intermédiaire d'une ligne de raccordement principale à un réseau de transmission d'informations, qui comporte un dispositif de commande (ST) servant à commander les différentes fonctions d'appareils et/ou l'échange d'informations techniques de commutation entre des dispositifs d'abonnés et des centraux du système de transmission d'informations et qui comporte un dispositif pour évaluer des tonalités audibles du système de transmission d'informations, caractérisé en ce
que le dispositif de commande (ST) contient le dispositif servant à évaluer les tonalités audibles et qui évalue, d'une manière commandée par l'utilisateur, le rapport impulsion/pause,
que des moyens sont prévus, dont l'actionnement permet à l'utilisateur de déclencher l'évaluation d'une tonalité audible,
qu'une mémoire (SP) servant à mémoriser au moins une impulsion/pause est reliée au dispositif de commande (ST) et que le dispositif de commande (ST) comporte des moyens qui, pendant la phase de fonctionnement, exécutent une comparaison entre des rapports pause/impulsion mémorisés dans la mémoire (SP) et des rapports impulsion/pause de tonalités audibles arrivantes.

3. Dispositif d'abonné (TE) selon la revendication 1 ou 2, caractérisé en ce que le dispositif d'abonné (TE) comporte un sélecteur automatique (W), que le dispositif de commande (ST) est relié au sélecteur automatique et à la mémoire (SP) et que, pendant la phase d'apprentissage, le dispositif de commande (ST) commande le sélecteur automatique (14) pour l'établissement d'une liaison avec soi-même par l'intermédiaire du central et commande ensuite la mémorisation du rapport impulsion/pause de la tonalité d'occupation dans la mémoire (SP).
